# EUROPEAN PATENT SPECIFICATION

(11) **EP 3 280 166 B1**
(45) Date of publication and mention of the grant of the patent: **20.05.2020**
(21) Application number: 16306009.8
(22) Date of filing: 04.08.2016
(51) Int. Cl.: H04W 24/02, H04W 36/06, H04W 88/08, H04W 28/02

(54) **METHOD, SYSTEM AND COMPUTER PROGRAM PRODUCT FOR OPERATING A WIRELESS NETWORK**
VERFAHREN, SYSTEM UND COMPUTERPROGRAMMPRODUKT ZUM BETRIEB EINES DRAHTLOSEN NETZWERKS
PROCÉDÉ, SYSTÈME ET PRODUIT DE PROGRAMME INFORMATIQUE POUR EXPLOITER UN RÉSEAU SANS FIL

(43) Date of publication of application: 07.02.2018
(73) Proprietor: Alcatel Lucent, 91620 Nozay (FR)
(72) Inventor: Ligata, Amir, 2018 Antwerpen (BE); Gacanin, Haris, 2018 Antwerpen (BE)
(74) Representative: Novagraaf Technologies

(56) References cited:
- EP-A1- 1 641 185
- WO-A1-2012/145706
- US-A1- 2009 003 215

## Description

### Field of Invention

The present invention relates to the operation of wireless networks (Wi-Fi).

### Background

Wireless technologies such as Wi-Fi access are widely used for indoor and outdoor wireless data services. Wi-Fi is a technology that allows electronic devices to connect to a wireless local area network (WLAN) based on the IEEE 802.11 standards, using the 2.4 gigahertz and 5 gigahertz radio bands. Access to a WLAN may typically be obtained through a wireless access point, which may be connected to the internet or another remote network via a backhaul or wide area network (WAN) interface. The access point may also connect to a separate router, which allows for a connection to the remote network such as the internet.

WO2012/145706, US2009/003215 and EP1641185 are examples of prior art. J

### Summary

The invention is defined by the appended claims.

According to a first aspect there is provided a method of operating a wireless network (Wi-Fi), the method comprising:
- obtaining connection parameters of one or more access points including a data buffer occupancy of the respective access points; and
- determining a connection overload status of the respective access points based on the obtained connection parameters.

The method has the advantage of providing the ability to ascertain whether an access point is overloaded, which may cause connection problems for connected user devices. In contrast, if manual detection of connection overload by the end users themselves is done by observation of his experience of the connection, which may be an experience of poor connection quality and/or speed and the like, the user and/or operator has no information what is the reason for the connection overload. If no reason for the connection overload is known, it is often addressed at the level of access point by clearing data buffer of the access point, that is, by a manual reset of the access point). However, this is undesirable and inefficient, because all associated devices will be disconnected causing abrupt drop of all services. Furthermore, the connection overload may occur again, since the underlying problem is not solved by the reset. The method, on the other hand, has the advantage that the determining of the overload status is done based on the connection parameters, and therefore the reason may be determined to be due to specific connection parameters. Knowing the reason, the connection overload may be solved by a more specific solution than a reset of the access point.

Connection overload or network saturation may be encountered in WLAN's, for instance IEEE 802.11 WLAN's. WLAN's wherein network overload may be encountered comprise home (indoor) and publically (outdoor) deployed WLAN's. Connection overload may occur when user devices of the end users generate more demands than the access point to which they are connected is able to support. Connection overload may further cause high latency, increased jitter and an increased loss rate, all of which have negative impact on the end user's connection quality. The achievable data throughput of the access point may be limited due to channel interference and/or contention between different APs. Furthermore, excessive requests by user devices may further exceed the achievable throughput capacity of the access point. Due to these issues among other things, the data buffer of the access point may be filled, and when the buffer is filled, the incoming packets (requests) may be dropped when the connection is overloaded, such as when the data buffer of the access point is filled. Connection overload is more frequent in a Wi-Fi network operating with a lower frequency band given the inherent interference that brings the attainable data rate of the wireless network down. The lower frequency band, for instance the 2.4 GHz band, which has a higher susceptibility for interference than, for instance, the 5 GHz band.

In a preferred embodiment, the connection overload status is determined to be positive when the data buffer occupancy is larger than a threshold value. Positive indicates that a connection overload is determined. Negative indicates that no connection overload is determined. The use of a threshold value has the advantage that a status to overload may be set to positive when the buffer is not yet entirely full. Therefore, before a user notices any connection problem, it may be observed that a connection overload may occur within a short time period, and steps to solve the problem may be performed. A data buffer may be at least a part of a physical memory storage used to temporarily store data while it is being moved from one place to another. Hence, in a wireless access point, the data buffer may be used to transfer data from user devices to destination devices, such as servers connected to the internet, and vice versa.

In a further embodiment, the connection parameters comprise wireless interface parameters and backhaul interface parameters, wherein the wireless interface parameters comprise the data buffer occupancy, a total data rate demand and a number of discarded packets, and the connection overload status is determined to be positive if the data buffer occupancy is larger than a first threshold value, the total data rate demand is larger than a second threshold value, or the number of discarded packets is larger than zero. Determining the connection overload status to be positive on the basis of a total data rate demand, being a sum of data rate demands used by connected user devices, gives a further advantage that an overload status may be quickly determined before the users may notice a poor connection quality. Further determining an overload status to be positive on the basis of number of discarded packages provides the further advantage of making the method more robust. An access point may for instance discard packets if it is performing at the limits of its capacity, be it processor capacity or buffer capacity.

In an embodiment, the backhaul interface parameters include an attainable data rate, wherein the second threshold value is the attainable data rate. Hence, an connection overload status is determined to be positive when the total data rate demand is larger than the attainable data rate. An attainable data rate may for instance be 100 Mbps in a network with a low interference and low number of user devices. However, for instance due to interference, the attainable data rate may be as low as 30-35 Mbps for Wi-Fi networks using the 2.4 GHz band. It will be known that there may be other influences on the attainable data rate such as packet preamble size.

In an embodiment, the method further comprises:
- transmitting a notification to user devices connected to the respective access points that the respective access point is overloaded if the respective connection overload status is determined to be positive. The notification may further include a probable cause of the connection overload status. The notification may be transmitted to the network operator, such as an internet service provider. The user and/or operator may then be aware of the connection overload being present.

In a further embodiment, the method further comprises
- obtaining interference parameters from at least one of the one or more access points and/or user devices connected to the at least one access point, for the at least one access point and one or more neighboring access points; and
- calculating a level of interference originating from the one or more neighboring access points based on the interference parameters;
the method further comprising, if a positive connection overload status is determined and if the calculated level of interference is above a third threshold value:
- determining a range of the connected user devices from the access point;
- obtaining a band capability of the connected user devices;
- selecting connected user devices having a band capability and a range suitable for connection to the access point via the second band; and
- sending a switching request to the selected connected user devices for switching the selected connected user devices from a first band to a second band.

Many wireless access points are equipped with dual-band Wi-Fi radios, most of which are set to a lower (i.e. 2.4GHz) first band by default, whereas a capacity for a higher frequency (i.e. 5 GHz) second band is present. A higher frequency band has a lower tendency to suffer from channel interference due to, for instance, other neighboring access points. Therefore, switching the selected user devices to the second band may result in a better connection quality for the selected user devices. Furthermore, since fewer devices will be connected to the first band after switching of the selected user devices, the user devices still connected via the first band may have an improved connection quality.

In a preferred embodiment, the interference parameters comprise, for the at least one access point and one or more neighboring access points, a number of connected user devices, received signal strength indicators (RSSI's), and channel occupancy, wherein the range of the connected user devices is calculated based on respective received signal strength indicators of user devices for the at least one access point. An accurate calculation of the level of interference may be done when based on the number of connected user devices, RSSI's and channel occupancy.

The connection data and/or interference parameters may be obtained from the user device through the Open Mobile Alliance Device Management (OMA-DM) protocol. The connection data and/or interference parameters may be obtained from the access points using the TR-069 CPE WAN Management Protocol. It will be understood that further associated protocols such as the TR-098 and/or TR-181 may also be used.

According to a further embodiment, the method steps are performed by a remote control device. When the method is performed externally, it becomes possible to perform the method for many access points efficiently, without the need for special access points in need of, for instance, extra processing power to perform the method steps.

According to a second aspect, there is provided a system for operating a wireless network (Wi-Fi), the system comprising:
- an obtaining unit configured to obtain connection parameters of one or more access points including a data buffer occupancy of the respective access points; and
- a processor configured to determine a connection overload status of the one or more access points based on the obtained connection parameters.

According to a preferred embodiment, the connection overload status is determined to be positive when the data buffer occupancy is larger than a threshold value.

According to a further embodiment, the connection parameters comprise wireless interface parameters and backhaul interface parameters;
the wireless interface parameters comprise the data buffer occupancy, a total data rate demand and a number of discarded packets; and
the connection overload status is determined to be positive if the data buffer occupancy is larger than a first threshold value, the total data rate demand is larger than a second threshold value, or the number of discarded packets is larger than zero.

According to an embodiment, the backhaul interface parameters include an attainable data rate, wherein the second threshold value is the attainable data rate.

According to an embodiment, the system further comprises:
- a transmitter configured to transmit a notification to the user devices that the wireless access point is overloaded if the connection overload status is determined to be positive.

According to a further embodiment, the obtaining unit is further configured to obtain interference parameters from at least one of the one or more access points and/or user devices connected to the at least one access point, for the at least one access point and one or more neighboring access points,
wherein, if a positive connection overload status is determined, the processor is further configured to:
- calculate a level of interference originating from the one or more neighboring access points based on the interference parameters;
- obtain a band capability of the connected user devices; and
- determine a range of the connected user devices from the access point;
- select connected user devices having a band capability and a range suitable for connection to the access point via the second band;
and, wherein the transmitter is further configured to:
- send a switching request to the selected connected user devices for switching the selected connected user devices from a first band to a second band.

According to a preferred embodiment, the interference parameters comprise, for the at least one access point and one or more neighboring access points, a number of connected user devices, received signal strength indicators, and channel occupancy,
wherein the range of the connected user devices is calculated based on respective received signal strength indicators of user devices for the at least one access point.

According to a further embodiment, the system further comprises a remote control device, wherein the remote control device preferably comprises the obtaining unit, processor, and/or transmitter.

According to a further aspect, there is provided a computer program product comprising computer-executable instructions for performing the method according to any one of the steps of any one of the embodiments disclosed above, when the program is run on a computer.

According to a further aspect, there is provided a computer program comprising computer-executable instructions to perform the method according to any one of the steps of any one of the embodiments disclosed above, when the program is executed on a computer.

According to a further aspect, there is provided a computer device or other hardware device programmed to perform one or more steps of any one of the embodiments of the method disclosed above.

According to another aspect there is provided a data storage device encoding a program in machine-readable and machine-executable form to perform one or more steps of any one of the embodiments of the method disclosed above.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Fig. 1 is a flowchart illustrating an embodiment of an exemplary method of operating a wireless network;
Fig. 2 is a flowchart illustrating another embodiment of an exemplary method of operating a wireless network;
Fig. 3 is a flowchart illustrating yet another embodiment of an exemplary method of operating a wireless network;
Fig. 4 is a flowchart illustrating a further embodiment of an exemplary method of operating a wireless network;
Fig. 5 is a schematic drawing of an exemplary embodiment of a system for operating a wireless network; and
Fig. 6 schematically illustrates a wireless access point serving multiple user devices, according to an exemplary embodiment;

### Description of embodiments

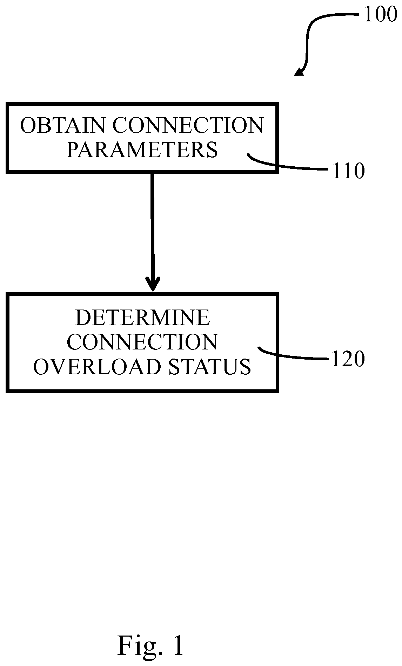

Fig. 1 illustrates a method of operating a wireless network (Wi-Fi), the method comprising:
- step 110 of obtaining connection parameters of one or more access points preferably including a data buffer occupancy of the respective access points; and
- step 120 of determining a connection overload status of the one or more access points based on the obtained connection parameters.

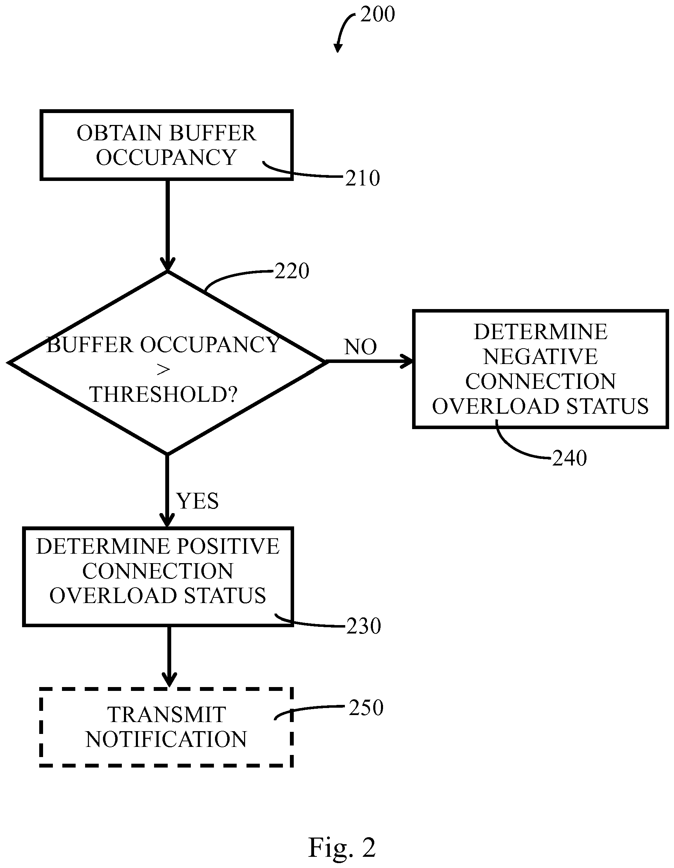

Fig. 2 illustrates another embodiment of an exemplary method, the method comprising:
- step 210 of obtaining connection parameters of one or more access points including a data buffer occupancy of the respective access points;
- step 220 of comparing the obtained data buffer occupancy with a threshold value;
- step 230 of determining a connection overload status of the one or more access points to be positive when the data buffer occupancy is larger than a threshold value
- step 240 of determining a connection overload status of the one or more access points to be negative when the data buffer occupancy is smaller than or equal to the threshold value. The threshold value for the data buffer occupancy may be, for instance, 70%, 75%, 80%, 85%, 90%, 95% or 100%.

As will be understood, the terms "positive" and "negative" may be seen as Boolean parameters, such as respectively True and False or any equivalent parameters. A data buffer occupancy may be obtained from an access point via relevant protocols, such as the TR-098 protocol, wherein a measure of the buffer occupancy may be expressed in percentage of the total buffer size.

In an embodiment, the method further comprises:
- step 250 of transmitting a notification to the user devices that the wireless access point is overloaded if the connection overload status is determined to be positive.

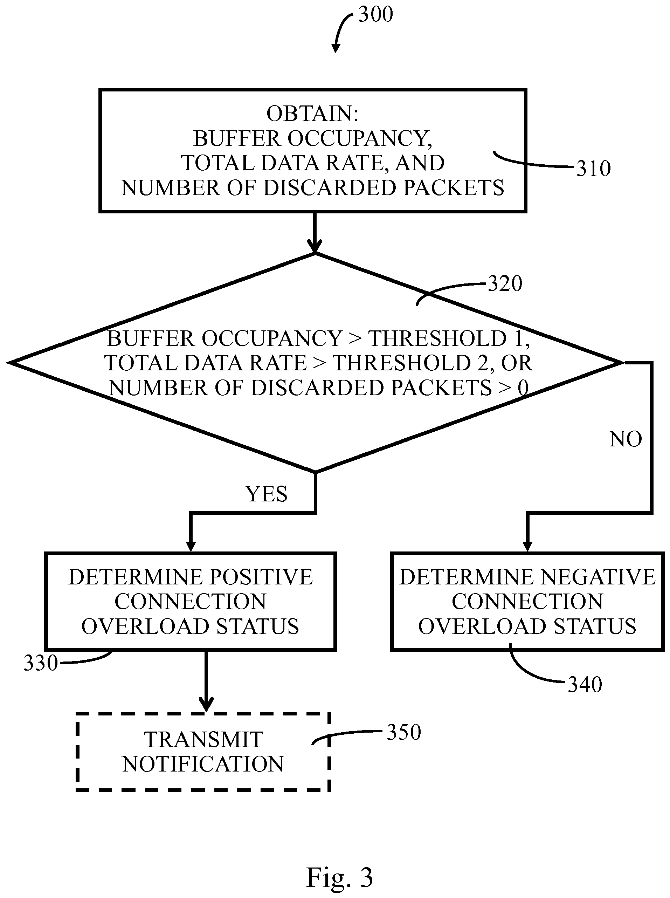

Fig. 3 illustrates a further embodiment of an exemplary method, wherein the connection parameters comprise wireless interface parameters and backhaul interface parameters, the method comprising:
- step 310 of obtaining wireless interface parameters of one or more access points including a data buffer occupancy, a total data rate demand and a number of discarded packets of the respective access points;
- step 320 of comparing the data buffer occupancy with a first threshold value, the total data rate demand with a second threshold value, and the number of discarded packets with zero;
- step 330 of determining a connection overload status of the one or more access points to be positive when the data buffer occupancy is larger than a first threshold value, the total data rate demand is larger than a second threshold value, or the number of discarded packets is larger than zero.
- step 340 of determining a connection overload status of the one or more access points to be negative when the data buffer occupancy is smaller than or equal to a first threshold value, the total data rate demand is smaller than or equal to a second threshold value, and the number of discarded packets is equal to zero.

The number of discarded packets may be obtained via relevant protocols, such as the TR-098 protocol, whereby both a number of inbound and outbound discarded packets may be obtained. Discarded packets indicate packets that were discarded even though no errors had been detected preventing the packets to be successfully forwarded/delivered. A possible reason for discarding packets is to free up space in the data buffer of the access point. Further, a value for number of discarded packets may be set to zero after an access point is rebooted.

In an embodiment, the method further comprises:
- step 350 of transmitting a notification to the user devices that the wireless access point is overloaded if the connection overload status is determined to be positive.

In an embodiment, the backhaul interface parameters include an attainable data rate, wherein the second threshold value is the attainable data rate. Then, the connection overload status is determined to be positive when the total data rate demand is larger than the attainable data rate. An attainable data rate may for instance be 100 Mbps in a network with a low interference and low number of user devices. However, for instance due to interference, the attainable data rate may be as low as 30-35 Mbps for Wi-Fi networks using the 2.4 GHz band. It will be known that there may be other influences on the attainable data rate such as contention with the neighboring access points. The attainable data rate may also be limited by the backhaul connection, for instance due to line attenuation. A value for the attainable data rate may be obtained via relevant protocols, for instance, via the TR-098 protocol, wherein a value may be obtained expressed in Kbps, Mbps or the like, for instance for the upstream and downstream channels of a DSL connection.

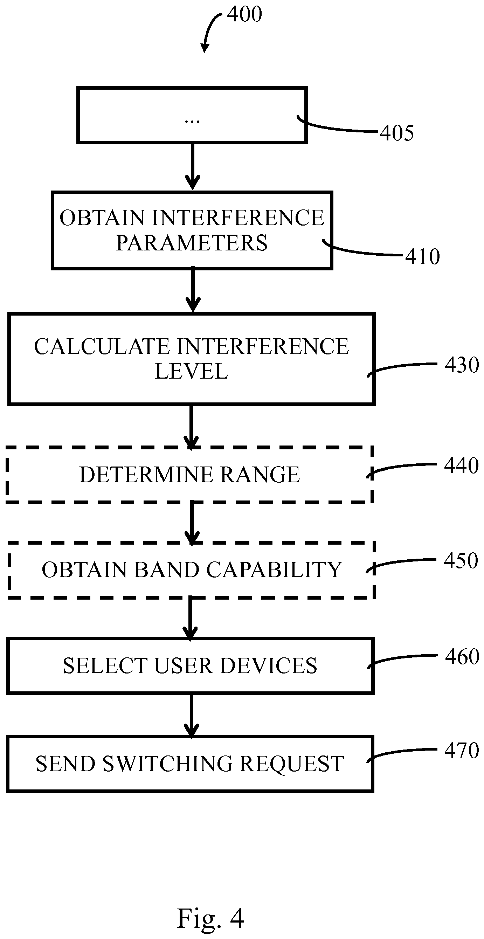

Fig. 4 illustrates a further embodiment of an exemplary method, wherein step 405 indicates that any of the previous method steps with reference to figs. 1-3 are performed, wherein the method further comprises:
- step 410 of obtaining interference parameters from at least one of the one or more access points and/or user devices connected to the at least one access point, for the at least one access point and one or more neighboring access points;
- step 430 of calculating a level of interference originating from the one or more neighboring access points based on the interference parameters;
the method further comprising, optionally only under the condition that a positive connection overload status is determined and/or if the calculated level of interference is above a third threshold value:
- step 440 of determining a range of the connected user devices from the access point;
- step 460 of selecting connected user devices having a range suitable for connection to the access point via the second band; and
- step 470 of sending a switching request to the selected connected user devices for switching the selected connected user devices from a first band to a second band.

In an embodiment, the method further comprises, before step 460 of selecting user devices:
- step 450 of obtaining a band capability of the connected user devices; wherein in step 460 the connected user devices are selected having a band capability and a range suitable for connection to the access point via the second band. The band capability may be obtained prior to the selecting step to avoid unnecessary switching requests. However, switching requests may also be rejected by the user devices in case the user devices have no band capability to switch to a second band.

In a preferred embodiment, the interference parameters comprise, for the at least one access point and one or more neighboring access points, a number of connected user devices, received signal strength indicators (RSSI's), and channel occupancy, wherein the range of the connected user devices is calculated based on respective received signal strength indicators of user devices for the at least one access point. The calculating of a range may be merely determining that the range is sufficiently small, for instance by determining that the RSSI value is above a certain value, such as -60 dBm.

The connection data and/or interference parameters may be obtained from the user device through the Open Mobile Alliance Device Management (OMA-DM) protocol. The connection data and/or interference parameters may be obtained from the access points using the TR-069 CPE WAN Management Protocol. It will be understood that further associated protocols such as the TR-098 and/or TR-181 may also be used.

According to a further embodiment, the method steps are performed by a remote control device.

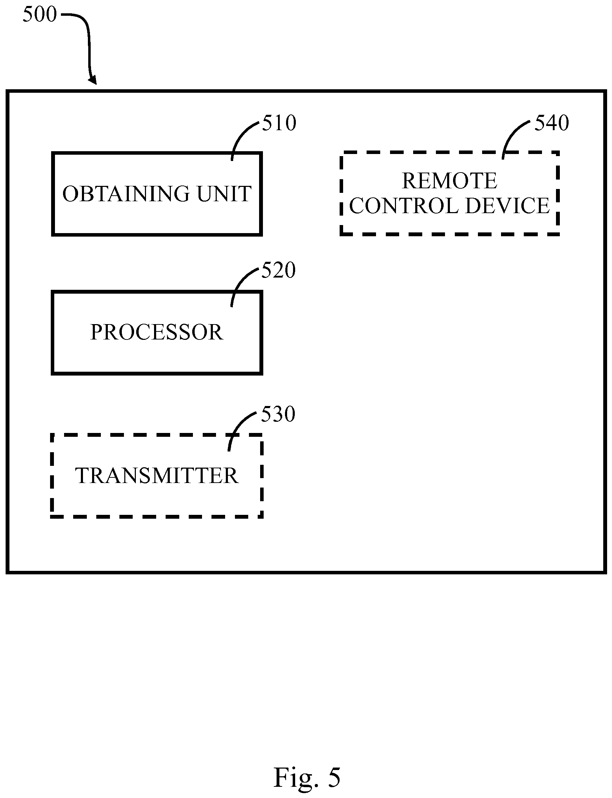

Fig. 5 illustrates a system for operating a wireless network (Wi-Fi), the system comprising:
- an obtaining unit 510 configured to obtain connection parameters of one or more access points including a data buffer occupancy of the respective access points; and
- a processor 520 configured to determine a connection overload status of the one or more access points based on the obtained connection parameters.

According to a preferred exemplary embodiment, the connection overload status is determined to be positive when the data buffer occupancy is larger than a threshold value.

According to a further exemplary embodiment, the connection parameters comprise wireless interface parameters and backhaul interface parameters;
the wireless interface parameters comprise the data buffer occupancy, a total data rate demand and a number of discarded packets; and
the connection overload status is determined to be positive if the data buffer occupancy is larger than a first threshold value, the total data rate demand is larger than a second threshold value, or the number of discarded packets is larger than zero.

According to an exemplary embodiment, the backhaul interface parameters include an attainable data rate, wherein the second threshold value is the attainable data rate.

According to an exemplary embodiment, the system further comprises:
- a transmitter 530 configured to transmit/push a notification to connected user devices that the one or more access points is overloaded if the connection overload status is determined to be positive.

According to a further embodiment, the obtaining unit 510 is further configured to obtain interference parameters from at least one of the one or more access points and/or user devices connected to the at least one access point, for the at least one access point and one or more neighboring access points,
wherein, if a positive connection overload status is determined, the processor 520 is further configured to:
- calculate a level of interference originating from the one or more neighboring access points based on the interference parameters;
- obtain a band capability of the connected user devices; and
- determine a range of the connected user devices from the access point;
- select connected user devices having a band capability and a range suitable for connection to the access point via the second band;
and, wherein the transmitter 530 is further configured to:
- send a switching request to the selected connected user devices for switching the selected connected user devices from a first band to a second band.

According to a preferred embodiment, the interference parameters comprise, for the at least one access point and one or more neighboring access points, a number of connected user devices, received signal strength indicators, and channel occupancy,
wherein the range of the connected user devices is calculated based on respective received signal strength indicators of user devices for the at least one access point.

According to a further embodiment, the system further comprises a remote control device 540, wherein the remote control device 540 preferably comprises the obtaining unit 510, processor 520, and/or transmitter 530.

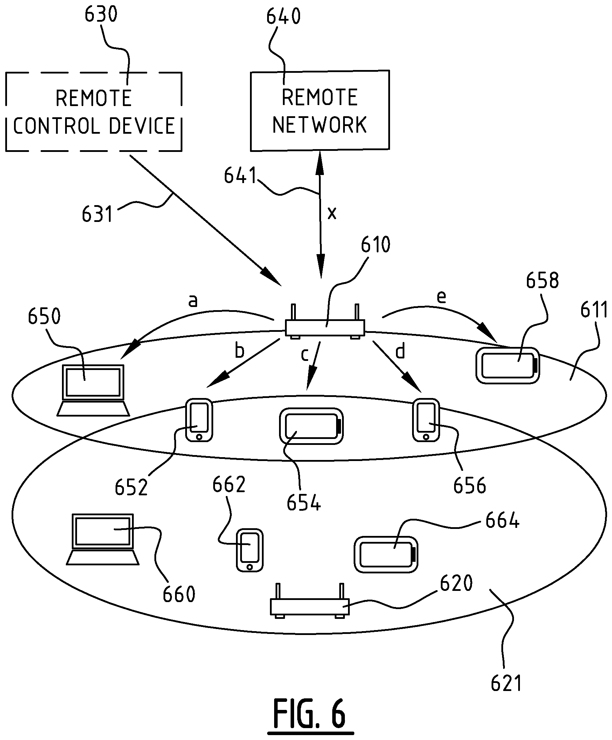

Fig. 6 schematically illustrates an access point (AP) 610 serving various user devices 650, 652, 654, 656 and 658 through a wireless network (Wi-Fi) 611. The AP 610 is connected via a backhaul link 641 to a remote network 640 via its backhaul (or WAN) interface. The remote network may be, for instance, the internet. Arrow 631 indicates that, in an embodiment, AP 610 may be controlled by remote control device 630, which may for instance be operated by an internet service provider.

The user devices 650, 652, 654, 656 and 658 that are connected to AP 610 are having respective data rate demands indicated by a, b, c, d and e. Although the arrows indicate a downstream direction, it will be understood that also upstream data rates are used, which may be different from the downstream data rates. Using downstream rates a, b, c, d, and e as an example, if the sum of these rates exceeds an attainable downstream data rate by the backhaul link 641, a data buffer of AP 610 will slowly be occupied until it is full. When this happens, packets may be discarded. If it is determined that a buffer occupancy is over a certain value, a notification may be sent to the user devices 650, 652, 654, 656 and/or 658. Also, a notification may be sent to the operator, e.g. the internet service provider. In case the AP 610 is controlled by remote control device 630, all connection data obtained will be available for the operator, and may be directed to solve the connection issues that will be experienced by the users operating the user devices.

In fig. 6, a second access point 620 is indicated, which is serving other user devices 660, 662 and 664 via wireless network (Wi-Fi) 621. Wireless network 621 may fully or partially overlap with wireless network 611. Depending on the channel(s) used to communicate between user devices and access points belonging to the wireless networks 611 and 621, interference may occur. Wireless network 611 may for instance be operated in a first band, for example 2.4 GHz, and in a certain channel. If wireless network 621 also operates in the first band and in an overlapping channel, the interference and/or contention may cause the data rate of the wireless network 611 to be lower than possible, for instance based on the specifications of AP 610. Then, the above explained method provides for user devices capable of switching to a second band, for example 5 GHz, to switch to that second band. Hereafter, the switched user devices may have an increased connection quality due to less interference present in the second, higher frequency, band. The second band may be operated by AP 610 with a service set identifier (SSID) that is different from the SSID for the first band. A user device may also not switch to the second band, for instance in case its range to the AP is too large. A range may be determined via a RSSI value. It will be understood that determining a range may be done by the user devices, by the access point and/or the remote control device.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units", "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "unit", "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. Method of operating a Wi-Fi wireless network, the method comprising:
- obtaining (210) connection parameters of one or more access points including a data buffer occupancy of the respective access points;
- determining (220) a connection overload status of the respective access points based on the obtained connection parameters, wherein the connection overload status is determined to be positive when the data buffer occupancy is larger than a threshold value;
- obtaining (410) interference parameters from at least one of the one or more access points and/or user devices connected to the at least one access point, for the at least one access point and one or more neighboring access points; and
- calculating (430) a level of interference originating from the one or more neighboring access points based on the interference parameters;
the method further comprising, if a positive connection overload status is determined and if the calculated level of interference is above a third threshold value:
- determining (440) a range of the connected user devices from the access point;
- obtaining (450) a band capability of the connected user devices to switch to a second band of the Wi-Fi wireless network;
- selecting (460) connected user devices having a band capability and a range suitable for connection to the access point via the second band; and
- sending (470) a switching request to the selected connected user devices for switching the selected connected user devices from a first band to the second band.

2. Method according to claim 1, wherein:
the connection parameters comprise wireless interface parameters and backhaul interface parameters;
the wireless interface parameters comprise the data buffer occupancy, a total data rate demand and a number of discarded packets; and
the connection overload status is determined to be positive if the data buffer occupancy is larger than a first threshold value, the total data rate demand is larger than a second threshold value, or the number of discarded packets is larger than zero.

3. Method according to claim 2, wherein the backhaul interface parameters include an attainable data rate, wherein the second threshold value is the attainable data rate.

4. Method according to any one of claims 1 to 3, further comprising:
transmitting a notification to user devices connected to the respective access points that the respective access point is overloaded if the respective connection overload status is determined to be positive.

5. Method according to any one of claims 1 to 4, wherein the interference parameters comprise, for the at least one access point and one or more neighboring access points, a number of connected user devices, received signal strength indicators, and channel occupancy,
wherein the range of the connected user devices is calculated based on respective received signal strength indicators of user devices for the at least one access point.

6. Method according to any one of claims 1 to5, wherein the method steps are performed by a remote control device.

7. System (500) for operating a Wi-Fi wireless network, the system comprising:
- an obtaining unit (510) configured to obtain connection parameters of one or more access points including a data buffer occupancy of the respective access points; and
- a processor (520) configured to determine a connection overload status of the respective access points based on the obtained connection parameters, wherein the connection overload status is determined to be positive when the data buffer occupancy is larger than a threshold value;
- a transmitter (530) configured to transmit a notification to user devices connected to the respective access points that the respective access point is overloaded if the respective connection overload status is determined to be positive, and
wherein the obtaining unit is further configured to obtain interference parameters from at least one of the one or more access points and/or user devices connected to the at least one access point, for the at least one access point and one or more neighboring access points,
wherein, if a positive connection overload status is determined, the processor is further configured to:
- calculate a level of interference originating from the one or more neighboring access points based on the interference parameters;
- obtain a band capability of the connected user devices to switch to a second band of the Wi-Fi network; and
- determine a range of the connected user devices from the access point;
- select connected user devices having a band capability and a range suitable for connection to the access point via the second band; and,
wherein the transmitter is further configured to:
- send a switching request to the selected connected user devices for switching the selected connected user devices from a first band to the second band.

8. System according to claim 7, wherein:
the connection parameters comprise wireless interface parameters and backhaul interface parameters;
the wireless interface parameters comprise the data buffer occupancy, a total data rate demand and a number of discarded packets; and
the connection overload status is determined to be positive if the data buffer occupancy is larger than a first threshold value, the total data rate demand is larger than a second threshold value, or the number of discarded packets is larger than zero,
wherein the backhaul interface parameters preferably include an attainable data rate, wherein the second threshold value is the attainable data rate.

9. System according to claim 7 or 8, wherein the interference parameters comprise, for the at least one access point and one or more neighboring access points, a number of connected user devices, received signal strength indicators, and channel occupancy,
wherein the range of the connected user devices is calculated based on respective received signal strength indicators of user devices for the at least one access point.

10. System according to any one of claims 7 to 9, further comprising a remote control device comprising, wherein the remote control device preferably comprises the obtaining unit, processor, and/or transmitter.

11. Computer program product comprising computer-executable instructions for performing the method of any one of claims 1 to 6, when the program is run on a computer.

## Patentansprüche

1. Verfahren zum Betreiben eines drahtlosen Wi-Fi-Netzes, wobei das Verfahren Folgendes umfasst:
- Erhalten (210) von Verbindungsparametern eines oder mehrerer Zugangspunkte, die eine Datenpufferbelegung der jeweiligen Zugangspunkte enthalten;
- Bestimmen (220) eines Verbindungüberlastungszustands der jeweiligen Zugangspunkte auf der Grundlage der erhaltenen Verbindungsparameter, wobei bestimmt wird, dass der Verbindungsüberlastungszustand positiv ist, wenn die Datenpufferbelegung größer als ein Schwellenwert ist;
- Erhalten (410) von Interferenzparametern von mindestens einem des einen oder der mehreren Zugangspunkte und/oder von Anwendervorrichtungen, die mit dem mindestens einen Zugangspunkt verbunden sind, für den mindestens einen Zugangspunkt und einen oder mehrere benachbarte Zugangspunkte; und
- Berechnen (430) eines Interferenzpegels, der von dem einen oder den mehreren benachbarten Zugangspunkten herrührt, auf der Grundlage der Interferenzparameter;
wobei das Verfahren ferner Folgendes umfasst, wenn ein positiver Verbindungsüberlastungszustand bestimmt wird und wenn der berechnete Interferenzpegel über einem dritten Schwellenwert liegt:
- Bestimmen (440) einer Reichweite der verbundenen Anwendervorrichtungen vom Zugangspunkt;
- Erhalten (450) einer Bandkapazität der verbundenen Anwendervorrichtungen, um auf ein zweites Band des drahtlosen Wi-Fi-Netzes umzuschalten;
- Auswählen (460) der verbundenen Anwendervorrichtungen, die eine Bandkapazität und eine Reichweite aufweisen, die für eine Verbindung mit dem Zugangspunkt über das zweite Band geeignet sind; und
- Senden (470) einer Umschaltanfrage an die ausgewählten, verbundenen Anwendervorrichtungen zum Umschalten der ausgewählten, verbundenen Anwendervorrichtungen von einem ersten Band auf das zweite Band.

2. Verfahren nach Anspruch 1, wobei:
die Verbindungsparameter Drahtlosschnittstellenparameter und Rückfrachtschnittstellenparameter umfassen;
die Drahtlosschnittstellenparameter die Datenpufferbelegung, einen Gesamtdatenratenbedarf und eine Anzahl verworfener Pakete umfassen; und
bestimmt wird, dass der Verbindungsüberlastungszustand positiv ist, wenn die Datenpufferbelegung größer als ein erster Schwellenwert ist, der Gesamtdatenratenbedarf größer als ein zweiter Schwellenwert ist oder die Anzahl der verworfenen Pakete größer als null ist.

3. Verfahren nach Anspruch 2, wobei die Rückfrachtschnittstellenparameter eine erreichbare Datenrate enthalten, wobei der zweite Schwellenwert die erreichbare Datenrate ist.

4. Verfahren nach einem der Ansprüche 1 bis 3, das ferner Folgendes umfasst:
Übertragen einer Benachrichtigung an die Anwendervorrichtungen, die mit den jeweiligen Zugangspunkten verbunden sind, dass der jeweilige Zugangspunkt überlastet ist, wenn bestimmt wird, dass der jeweilige Verbindungsüberlastungszustand positiv ist.

5. Verfahren nach einem der Ansprüche 1 bis 4, wobei die Interferenzparameter für den mindestens einen Zugangspunkt und einen oder mehrere benachbarte Zugangspunkte eine Anzahl der verbundenen Anwendervorrichtungen, Indikatoren für die empfangene Signalstärke und eine Kanalbelegung umfassen,
wobei die Reichweite der verbundenen Anwendervorrichtungen auf der Grundlage der jeweiligen Indikatoren für die empfangene Signalstärke der Anwendervorrichtungen für den mindestens einen Zugangspunkt berechnet wird.

6. Verfahren nach einem der Ansprüche 1 bis 5, wobei die Verfahrensschritte durch eine Fernsteuerungsvorrichtung durchgeführt werden.

7. System (500) zum Betreiben eines drahtlosen Wi-Fi-Netzes, wobei das System Folgendes umfasst:
- eine Erhaltungseinheit (510), die konfiguriert ist, Verbindungsparameter eines oder mehrerer Zugangspunkte zu erhalten, die eine Datenpufferbelegung des jeweiligen Zugangspunktes enthalten; und
- einen Prozessor (520), der konfiguriert ist, auf der Grundlage der erhaltenen Verbindungsparameter einen Verbindungsüberlastungszustand der jeweiligen Zugangspunkte zu bestimmen, wobei bestimmt wird, dass der Verbindungsüberlastungszustand positiv ist, wenn die Datenpufferbelegung größer als ein Schwellenwert ist;
- einen Sender (530), der konfiguriert ist, eine Benachrichtigung an die Anwendervorrichtungen, die mit den jeweiligen Zugangspunkten verbunden sind, zu senden, dass der jeweilige Zugangspunkt überlastet ist, wenn bestimmt wird, dass der jeweilige Verbindungsüberlastungszustand positiv ist, und
wobei die Erhaltungseinheit ferner konfiguriert ist, Interferenzparameter von mindestens einem des einen oder der mehreren Zugangspunkte und/oder von Anwendervorrichtungen, die mit dem mindestens einen Zugangspunkt verbunden sind, für den mindestens einen Zugangspunkt und einen oder mehrere benachbarte Zugangspunkte zu erhalten,
wobei dann, wenn ein positiver Verbindungsüberlastungszustand bestimmt wird, der Prozessor ferner konfiguriert ist zum:
- Berechnen eines Interferenzpegels, der von dem einen oder den mehreren benachbarten Zugangspunkten herrührt, auf der Grundlage der Interferenzparameter;
- Erhalten einer Bandkapazität der verbundenen Anwendervorrichtungen, um auf ein zweites Band des Wi-Fi-Netzes umzuschalten; und
- Bestimmen einer Reichweite der verbundenen Anwendervorrichtungen vom Zugangspunkt;
- Auswählen der verbundenen Anwendervorrichtungen, die eine Bandkapazität und eine Reichweite aufweisen, die für eine Verbindung mit dem Zugangspunkt über das zweite Band geeignet sind; und wobei der Sender ferner konfiguriert ist zum:
- Senden einer Umschaltanfrage an die ausgewählten, verbundenen Anwendervorrichtungen zum Umschalten der ausgewählten, verbundenen Anwendervorrichtungen von einem ersten Band auf das zweite Band.

8. System nach Anspruch 7, wobei:
die Verbindungsparameter Drahtlosschnittstellenparameter und Rückfrachtschnittstellenparameter umfassen;
die Drahtlosschnittstellenparameter die Datenpufferbelegung, einen Gesamtdatenratenbedarf und eine Anzahl verworfener Pakete umfassen; und
bestimmt wird, dass der Verbindungsüberlastungszustand positiv ist, wenn die Datenpufferbelegung größer als ein erster Schwellenwert ist, der Gesamtdatenratenbedarf größer als ein zweiter Schwellenwert ist oder die Anzahl der verworfenen Pakete größer als null ist,
wobei die Rückfrachtschnittstellenparameter vorzugsweise eine erreichbare Datenrate enthalten, wobei der zweite Schwellenwert die erreichbare Datenrate ist.

9. System nach Anspruch 7 oder 8, wobei die Interferenzparameter für den mindestens einen Zugangspunkt und einen oder mehrere benachbarte Zugangspunkte eine Anzahl der verbundenen Anwendervorrichtungen, Indikatoren für die empfangene Signalstärke und eine Kanalbelegung umfassen,
wobei die Reichweite der verbundenen Anwendervorrichtungen auf der Grundlage der jeweiligen Indikatoren für die empfangene Signalstärke der Anwendervorrichtungen für den mindestens einen Zugangspunkt berechnet wird.

10. System nach einem der Ansprüche 7 bis 9, das ferner eine Fernsteuerungsvorrichtung umfasst, wobei die Fernsteuerungsvorrichtung vorzugsweise die Erhaltungseinheit, den Prozessor und/oder den Sender umfasst.

11. Computerprogrammprodukt, das computerlesbare Anweisungen zum Durchführen des Verfahrens nach einem der Ansprüche 1 bis 6, wenn das Programm auf einem Computer durchlaufen wird, umfasst.

## Revendications

1. Procédé d'exploitation d'un réseau sans fil Wi-Fi, le procédé comprenant :
- l'obtention (210) de paramètres de connexion d'un ou de plusieurs points d'accès comportant une occupation de tampon de données des points d'accès respectifs ;
- la détermination (220) d'un état de surcharge de connexion des points d'accès respectifs sur la base des paramètres de connexion obtenus, l'état de surcharge de connexion étant déterminé comme positif lorsque l'occupation de tampon de données dépasse une valeur-seuil ;
- l'obtention (410) de paramètres d'interférence à partir d'au moins un des un ou plusieurs points d'accès et/ou de dispositifs utilisateurs connectés à l'au moins un point d'accès, pour l'au moins un point d'accès et un ou plusieurs points d'accès voisins ; et
- le calcul (430) d'un niveau d'interférence émanant des un ou plusieurs points d'accès voisins sur la base des paramètres d'interférence ;
le procédé comprenant en outre, en cas de détermination d'un état de surcharge de connexion positif et si le niveau d'interférence calculé dépasse une troisième valeur-seuil :
- la détermination (440) d'une portée des dispositifs utilisateurs connectés à partir du point d'accès ;
- l'obtention (450) d'une capacité en bande des dispositifs utilisateurs connectés pour commuter sur une deuxième bande du réseau sans fil Wi-Fi ;
- la sélection (460) de dispositifs utilisateurs connectés disposant d'une capacité en bande et d'une portée permettant une connexion au point d'accès au moyen de la deuxième bande ; et
- l'envoi (470) d'une requête de commutation aux dispositifs utilisateurs connectés sélectionnés pour la commutation des dispositifs utilisateurs connectés sélectionnés d'une première bande sur la deuxième bande.

2. Procédé selon la revendication 1, dans lequel :
les paramètres de connexion comprennent des paramètres d'interface sans fil et des paramètres d'interface backhaul ;
les paramètres d'interface sans fil comprennent l'occupation de tampon de données, une demande de débit de données totale et un nombre de paquets abandonnés ; et
l'état de surcharge de connexion est déterminé comme positif si l'occupation de tampon de données dépasse une première valeur-seuil, la demande de débit de données totale dépasse une deuxième valeur-seuil ou le nombre de paquets abandonnés est supérieur à zéro.

3. Procédé selon la revendication 2, dans lequel les paramètres d'interface backhaul comportent un débit de données réalisable, la deuxième valeur-seuil correspondant au débit de données réalisable.

4. Procédé selon l'une quelconque des revendications 1 à 3, comprenant en outre :
la transmission, à des dispositifs utilisateurs connectés aux points d'accès respectifs, d'une notification que le point d'accès respectif est en surcharge si l'état de surcharge de connexion respectif est déterminé comme positif.

5. Procédé selon l'une quelconque des revendications 1 à 4, dans lequel les paramètres d'interférence comprennent, pour l'au moins un point d'accès et un ou plusieurs points d'accès voisins, un nombre de dispositifs utilisateurs connectés, des indicateurs d'intensité de signal à la réception et une occupation de canaux,
dans lequel la portée des dispositifs utilisateurs connectés est calculée sur la base d'indicateurs d'intensité de signal à la réception respectifs de dispositifs utilisateurs pour l'au moins un point d'accès.

6. Procédé selon l'une quelconque des revendications 1 à 5, dans lequel les étapes de procédé sont mises en œuvre par un dispositif de commande à distance.

7. Système (500) d'exploitation d'un réseau sans fil Wi-Fi, le système comprenant :
- une unité d'obtention (510) configurée pour obtenir des paramètres de connexion d'un ou de plusieurs points d'accès comportant une occupation de tampon de données des points d'accès respectifs ; et
- un processeur (520) configuré pour déterminer un état de surcharge de connexion des points d'accès respectifs sur la base des paramètres de connexion obtenus, l'état de surcharge de connexion étant déterminé comme positif lorsque l'occupation de tampon de données dépasse une valeur-seuil ;
- un émetteur (530) configuré pour transmettre, à des dispositifs utilisateurs connectés aux points d'accès respectifs, une notification que le point d'accès respectif est en surcharge si l'état de surcharge de connexion respectif est déterminé comme positif, et
l'unité d'obtention étant configurée en outre pour obtenir de paramètres d'interférence à partir d'au moins un des un ou plusieurs points d'accès et/ou de dispositifs utilisateurs connectés à l'au moins un point d'accès, pour l'au moins un point d'accès et un ou plusieurs points d'accès voisins,
en cas de détermination d'un état de surcharge de connexion positif, le processeur étant configuré en outre pour :
- calculer un niveau d'interférence émanant des un ou plusieurs points d'accès voisins sur la base des paramètres d'interférence ;
- obtenir une capacité en bande des dispositifs utilisateurs connectés pour commuter sur une deuxième bande du réseau sans fil Wi-Fi ; et
- déterminer une portée des dispositifs utilisateurs connectés à partir du point d'accès ;
- sélectionner des dispositifs utilisateurs connectés disposant d'une capacité en bande et d'une portée permettant une connexion au point d'accès au moyen de la deuxième bande ; et,
l'émetteur étant configuré en outre pour :
- envoyer une requête de commutation aux dispositifs utilisateurs connectés sélectionnés pour la commutation des dispositifs utilisateurs connectés sélectionnés d'une première bande sur la deuxième bande.

8. Système selon la revendication 7, dans lequel :
les paramètres de connexion comprennent des paramètres d'interface sans fil et des paramètres d'interface backhaul ;
les paramètres d'interface sans fil comprennent l'occupation de tampon de données, une demande de débit de données totale et un nombre de paquets abandonnés ; et
l'état de surcharge de connexion est déterminé comme positif si l'occupation de tampon de données dépasse une première valeur-seuil, la demande de débit de données totale dépasse une deuxième valeur-seuil ou le nombre de paquets abandonnés est supérieur à zéro,
dans lequel les paramètres d'interface backhaul comportent de préférence un débit de données réalisable, la deuxième valeur-seuil correspondant au débit de données réalisable.

9. Système selon la revendication 7 ou 8, dans lequel les paramètres d'interférence comprennent, pour l'au moins un point d'accès et un ou plusieurs points d'accès voisins, un nombre de dispositifs utilisateurs connectés, des indicateurs d'intensité de signal à la réception et une occupation de canaux,
dans lequel la portée des dispositifs utilisateurs connectés est calculée sur la base d'indicateurs d'intensité de signal à la réception respectifs de dispositifs utilisateurs pour l'au moins un point d'accès.

10. Système selon l'une quelconque des revendications 7 à 9, comprenant en outre un dispositif de commande à distance, le dispositif de commande à distance comprenant de préférence l'unité d'obtention, le processeur et/ou l'émetteur.

11. Produit-programme d'ordinateur comprenant des instructions exécutables par ordinateur permettant la mise en œuvre du procédé selon l'une quelconque des revendications 1 à 6 lorsque le programme est exécuté sur un ordinateur.
